# EUROPEAN PATENT SPECIFICATION

(11) **EP 4 091 459 B1**
(45) Date of publication and mention of the grant of the patent: **18.02.2026**
(21) Application number: 22172348.9
(22) Date of filing: 09.05.2022
(51) Int. Cl.: A23N 4/08, B07B 1/00, C11B 1/00

(54) **SEPARATING MACHINE FOR THE PROCESSING OF MATERIAL**
TRENNMASCHINE ZUR MATERIALVERARBEITUNG
MACHINE DE SEPARATION POUR LE TRAITEMENT DE MATÉRIEL

(30) Priority: 20.05.2021 IT 202100013064
(43) Date of publication of application: 23.11.2022
(73) Proprietor: Clemente S.r.l., 75100 Matera (IT)
(72) Inventor: CLEMENTE, Nunzio, 75100 Matera (IT)
(74) Representative: Tiburzi, Andrea

(56) References cited:
- EP-B1- 2 721 130
- CN-A- 109 433 581
- ES-A1- 2 315 147
- ES-A2- 2 051 208
- JP-A- 2017 088 309

## Description

The present invention relates to a separating machine for material processing, in particular of heterogeneous material.

More in detail, the invention relates to a separating machine used in the separation of the heterogeneous waste material resulting from the machining of olives for the oil extraction, designed and manufactured in particular for the separation of the pomace from the pit, but which can be used for any application in which the separation in components of a heterogeneous material comprising several components is necessary.

In the following, the description will be addressed to the separation of waste materials resulting from the process of extracting oil from olives, but it is clear that it should not be considered limited to this specific use.

As is well known, the extracting oil process from olives produces waste materials in the form of a heterogeneous mixture.

It is also known that said mixture mainly comprises two distinct components, pits, and pomace.

Once separated, it is well known that the two components can be reused for different purposes.

In particular, the pit can be used as a fuel, for example inside the oil mill itself for the heating required in other stages of olive processing.

The pomace, on the other hand, can be used for example as a fertilizer on agricultural soil.

Currently, in the market, there are separating machines comprising a perforated hollow cylinder - or jacket, inside which a rotor rotates, which, exploiting the centrifugal force, pushes the material contained in the hollow cylinder outwards.

Holes of suitable diameter are obtained on said jacket to let the pomace come out, while at the same time keeping the pits inside the jacket itself.

Said pomace is a high viscosity material and therefore tends to adhere to the walls of the jacket.

In particular, the outer part of the jacket accumulates a considerable amount of pomace during the separation.

Said accumulated pomace makes it difficult for further pomace to come out of the jacket, consequently reducing the efficiency of the separation process.

It is therefore advisable to remove the pomace accumulated on the outer wall of the jacket during separation.

So-called pomace scraping systems are well known, which remove the pomace from the outer surface of the jacket.

In particular, pomace scraping systems are currently commercially available that remove the pomace by means of scraping components that move by rotating around the outer circumference of the jacket itself.

However, said known systems have considerable disadvantages.

In particular, the rotation of these scraping components around the jacket does not allow obtaining a complete cleaning of the external surface of the jacket.

In fact, said scraping components, which move by rotating, are unable to completely clean the outer jacket, which has dead points not accessible by rotating scraping components.

It is therefore clear that the jacket of known machines is only partially clean, also causing a consequent reduction in the efficiency of the separation process, since part of the pomace, unable to come out from the holes, remains inside the jacket, attached to the pits.

Documents CN109433581, EP2721130, ES2051208, ES2315147, and JP2017088309 are representative of the available art.

The present invention provides a separating machine in accordance with claim 1. Advantageous features are provided in the dependent claims.

It is therefore an object of the present invention to provide a machine capable of completely separating the pomace from the pits.

Another object of the invention is to provide a machine capable of completely cleaning the surface of the jacket of the machine.

The present invention will be now described, for illustrative but not limitative purposes, according to its preferred embodiments, with particular reference to the figures of the enclosed drawings, wherein:
figure 1 shows a front view of the separating machine, object of the present invention;
figure 2 shows a side view of the separating machine;
figure 3 shows a perspective view of the separating machine; and
figure 4 shows a perspective view of a component of the separating machine.

In the various figures, similar parts will be indicated with the same numerical references.

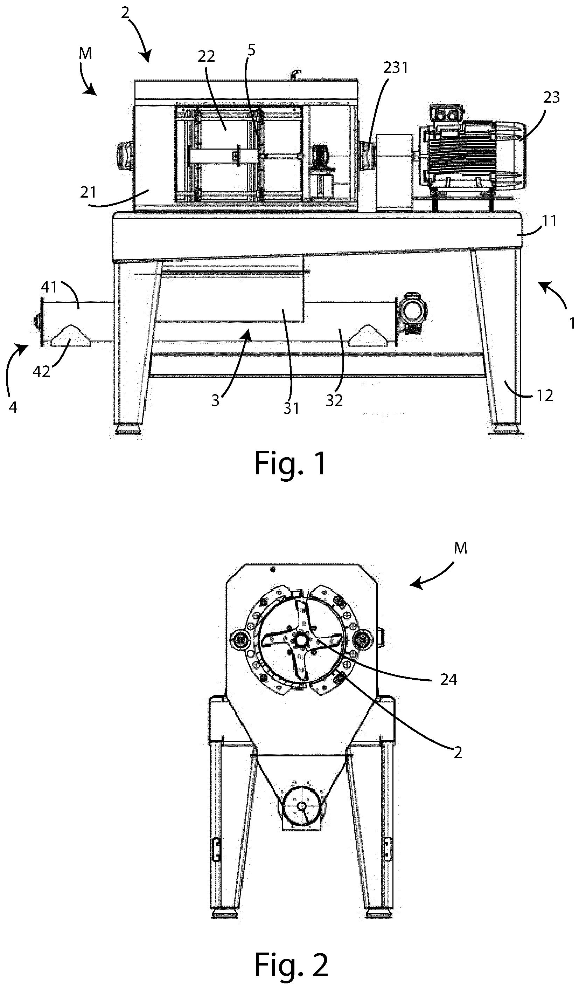

With reference to figures 1-3, the separating machine M for processing material, object of the present invention, in particular for the separation of heterogeneous material in the components that compose it, comprises a support frame 1, a separating device 2, arranged on said support frame 1, containing the waste material, made of pits and pomace, a first collection member 3, connected to said separating device 2, capable of collecting the pomace, a second collection member 4, connected to said separating device 2, capable of collecting the pits, and a scraping device 5 coupled to said separating device 2.

Said support frame 1 comprises a horizontal surface 11 capable of supporting components that are coupled to it, and one or more vertical components 12, coupled to said horizontal surface 11 and which allow the grounding of said machine M.

On said horizontal surface 11 is obtained an opening, not shown in the figure, capable of putting said separating device 2 in communication with said first collection member 3 and second collection member 4.

Said separating device 2 comprises an external protective casing 21, a separator member 22 arranged inside said protective casing 21, a first motor 23 and a rotor 24 connected to said first motor 23 and able to rotate internally to said separator member 22.

Said protective casing 21 surrounds said separator member 22 and it is capable of protecting said separator member 22 from the external environment and vice versa and is arranged in correspondence with said opening of said horizontal surface 11.

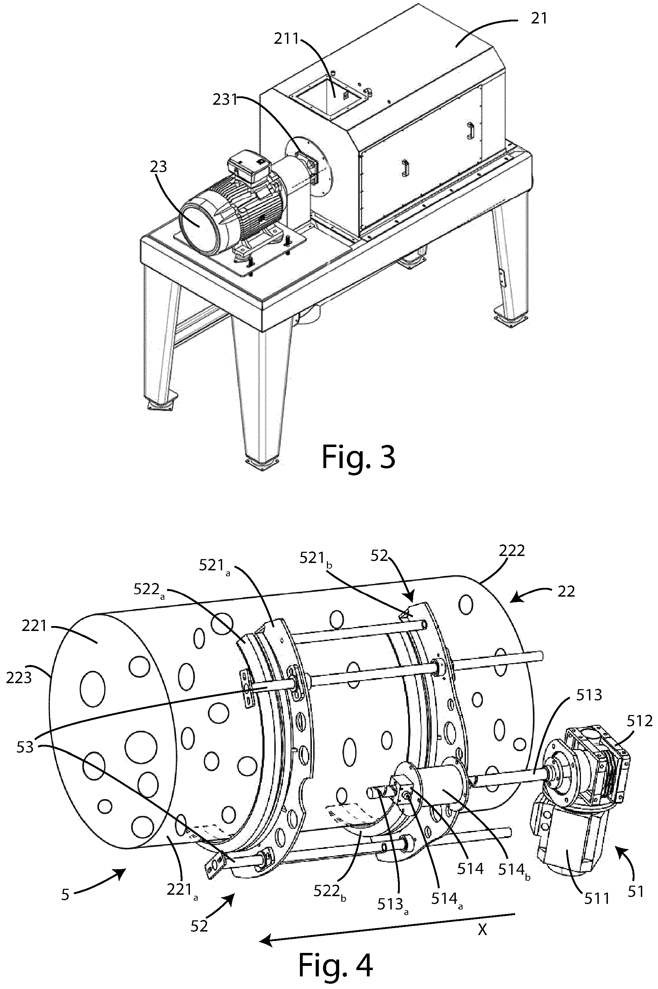

With particular reference to figure 3, said protective casing 21 has an inlet duct 211 for the waste material connected to said separator member 22, through which said waste material is conveyed into said separator member 22.

Referring now to figure 4, said separator member 22 comprises a hollow pierced surface 221, which extends along a development axis X, from a first end 222 to a second open end 223.

Said pierced surface 221 comprises an external side 221ₐ.

The non-separated waste material is arranged inside said pierced surface 221.

Furthermore, said second end 223 is open and is capable of making said pits come out.

With reference to figures 1-3, said first motor 23 is fixed to said horizontal surface 11.

Said first motor 23 comprises a flange 231, able to be coupled to said rotor 24.

Said rotor 24 is positioned inside said separator member 22 and is able to rotate inside said separator member 22 to move said waste material.

Said first collection member 3 is arranged below said horizontal surface 11, in correspondence with said opening.

Said first collection member 3 comprises a hopper 31 and a first duct 32, inside which a screw conveyor for transporting the pomace towards the outlet is arranged, connected to said separator member 22 by means of said hopper 31.

In particular, said hopper 31 is placed in correspondence with said opening and is able to collect the pomace that falls from said separator member 22 and convey it towards said first duct 32.

Said first duct 32 is able to let the pomace come out towards the outside of said machine M.

Said second collection member 4 comprises a second duct 41, within which a screw for transporting the pits is arranged, and an outlet portion 42 for the pits.

Said outlet portion 42 is connected to said separator member 22 by means of said second duct 41.

Said second duct 41 is capable of collecting the separate pits coming out of said separator member 22 and conveying them towards said outlet portion 42, which is able to make the pits to come out towards the outside of said machine M.

Referring to figure 4, said scraping device 5 is coupled to said separator member 22 and is capable of scraping said pierced surface 221, in particular, said external side 221ₐ, of said separator member 22, and removing the pomace deposited on said external side 221ₐ of said pierced surface 221.

Said scraping device 5 comprises a transmission group 51, one or more scraping members 52, and one or more guides 53.

Said one or more scraping members 52 are moved by said transmission group 51 and coupled to said one or more guides 53.

Said transmission group 51 comprises a second motor 511, a gearbox 512, a shaft 513, and a directional member 514.

Said shaft 513 is able to rotate around its own axis, parallel to said development axis X, and comprises a guide groove 513ₐ, capable of moving a member connected to it.

In particular, said guide groove 513ₐ is a double-principle helical groove, which therefore allows a member connected to it to be moved along the axis of said shaft 513 in reciprocating motion, without having to reverse the rotation direction of said shaft 513.

Said directional member 514 comprises a pin 514ₐ and an axial element 514_{b}.

Said directional member 514 is coupled to said shaft 513 by means of said pin 514ₐ, which is capable of sliding along said guide groove 513ₐ.

Said axial element 514_{b} is capable of moving along said development axis X, in a manner integral with the movement along, said development axis X of said pin 514ₐ.

Said second motor 511 is coupled to said shaft 513 by means of said gearbox 512 and is capable of moving said shaft 513.

Said one or more scraping members 52 comprise one or more flanges 521 and one or more scraping elements 522ₐ, 522_{b}.

Said one or more flanges 521 are coupled to said one or more guides 53 and to said directional member 514.

Said directional member 514 is able to axially move said one or more flanges 521.

Said one or more flanges 521 are able to axially slide along said one or more guides 53 when moved by said directional member 514, along said development axis X.

Said one or more scraping elements 522ₐ, 522_{b} are coupled to said one or more flanges 521 and are able to scrape said external side 221ₐ of said pierced surface 221 of said separator member 22.

In this embodiment, said one or more scraping elements 522ₐ, 522_{b} are in particular a first scraping element 522ₐ and a second scraping element 522_{b}.

Without departing from the scope of protection of the present invention, it is possible that said one or more scraping elements 522ₐ, 522_{b} are also only one or more than two.

In this embodiment, said scraping elements 522 are in particular made of polypropylene, so as to minimize the friction between said one or more scraping elements 522ₐ, 522_{b} and said external side 221ₐ of said pierced surface 221 of said member separator 22.

Without departing from the scope of protection of the present invention, it is possible that said one or more scraping elements 522 are made of other materials, such as AISI 304.

The operation of the machine M for processing material, object of the present invention described above is as follows.

When it is intended to separate the waste materials produced by the oil extraction from the olives, that is the pomace and the pits, said waste materials are introduced into said separator member 22 through said inlet duct 211.

The separation begins by starting said first engine 23, which rotates said rotor 24 inside said separator member 22.

The rotor 24 moves the waste materials inside said separator member 22, which moves towards said pierced surface 221 due to the centrifugal force.

The holes of said pierced surface 221 are sufficiently large to allow the pomace to flow towards the outside of said separator member 22, but sufficiently small to retain the pits inside.

The pits are then retained inside said separator member 22, while the pomace exits from said separator member 22 through the holes.

The pits then run through the interior of said separator member 22 said along the development axis X, until they exit through said second end 223 and enter said second duct 41 by gravity.

The pits are then conveyed towards said outlet portion 42.

The pits coming out of said outlet portion 42 can finally be collected using an external container.

Due to its high viscosity, the pomace coming out of said separator member 22 through the holes tends to deposit on said external side 221ₐ side of said pierced surface 221.

The deposit of the pomace partially or completely obstructs the holes of said pierced surface 221, and it, therefore, makes it difficult to release further pomace.

To avoid said deposit, said scraping device 5 is operated.

In particular, said second motor 511 is operated and said shaft 513 is consequently moved by means of said gearbox 512.

Said directional member 514 is then moved along said development axis X through said guide 513ₐ.

In particular, said pin 514ₐ moves along said guide groove 513ₐ, causing said directional member 514 to perform an alternating axial rectilinear motion.

Said one or more scraping members 52, therefore, move axially in a manner integral with said directional member 514.

In particular, said one or more scraping members 52 slide along said one or more guides 53 according to said development axis X.

Even more particularly, said one or more scraping elements 522 scrape said external side 221ₐ of said pierced surface 221 of said separator member 22, by means of an alternating axial movement.

This allows to completely scrape said external side 221ₐ of said pierced surface 221 of said separator member 22, and therefore to remove all the residue deposited.

The complete removal of the pomace from said external side 221ₐ of said pierced surface 221 facilitates the release of further pomace from said separator member 22.

This allows for optimizing the separation process of pomace and pits.

Once scraped from said external side 221ₐ of said pierced surface 221 of said separator member 22, the pomace falls into said hopper 31.

Said hopper 31 then conveys the pomace towards said first duct 32.

The pomace coming out of said first duct 32 can finally be collected through an external container.

A first advantage of the separating machine M for processing material, object of the present invention, described above, is the possibility of having a device capable of scraping and removing the pomace from all of said external side 221ₐ of said pierced surface 221.

This is possible by the alternating axial movement along said development axis X of said scraping device 5.

A further advantage of the separating machine M for processing material, object of the present invention, is the possibility of making the separation process more efficient than the machines of prior art.

In fact, the removal of the pomace from said external side 221ₐ of said pierced surface 221 allows the exit of further pomace from said separator member 22, maximizing the efficiency of the separation.

The present invention has been described for illustrative but not limitative purposes, according to its preferred embodiments, but it is to be understood that modifications and/or changes can be introduced by those skilled in the art without departing from the scope of the claims.

## Claims

1. Separating machine (M) for the processing of heterogeneous material resulting from the machining of olives for the oil extraction comprising
a separating device (2), provided with a pierced surface (221) which develops along a development axis (X), capable of containing a heterogeneous material and capable of causing the separation of said heterogeneous material in a first component and a second component and the pouring of said first component through said pierced surface (221), and
a scraping device (5), slidably coupled to and in contact with said pierced surface (221) of said separating device (2), capable of moving along a direction parallel to said development axis (X), to remove said first component from said pierced surface (221), wherein said scraping device (5) comprises a transmission group (51) and one or more scraping members (52),
said separating machine being **characterized in that** said scraping members (52) comprise:
a first scraping element (522a) and a first flange (521a) fixed to it,
a second scraping element (522b) and a second flange (521b) fixed to it,
said first scraping element (522a) and second scraping element (522b) being integral with each other.

2. Machine (M) according to the previous claim, **characterized in that** said scraping device (5) moves in alternate motion along said development axis (X).

3. Machine (M) according to the previous claim, **characterized in that** said one or more scraping members (52) are capable of translating along said development axis (X) via one or more guides (63).

4. Machine (M) according to the previous claim, **characterized in that** said first (522a) and second (522b) scraping elements are made of polypropylene.

5. Machine (M) according to claim 3 or 4, **characterized in that** said transmission group (51) comprises a motor (511), a gearbox (512), a directional member (514), comprising in turn a pin (514a) and a shaft (513), on which is obtained a double-start thread guide groove (513a), on which said directional member (514) is capable of moving via said pin (514a).

6. Machine (M) according to any of the previous claims, **characterized in that** it comprises a supporting frame (1), capable of supporting said separating device (2), comprising a horizontal surface (11) on which an opening is obtained,
a first collection member (3), placed near said opening, capable of collecting the pomace coming out from said separating device (2),
a second collection member (4), placed near said opening, capable of collecting the kernels coming out from said separating device (2).

## Patentansprüche

1. Trennmaschine (M) zur heterogene Materialverarbeitung, das bei der Bearbeitung von Oliven für die Ölgewinnung anfällt, umfassend
eine Trennvorrichtung (2), die mit einer durchbrochenen Oberfläche (221) versehen ist, die sich entlang einer Entwicklungsachse (X) entwickelt, die in der Lage ist, ein heterogenes Material zu enthalten, und die in der Lage ist, die Trennung des heterogenen Materials in eine erste Komponente und eine zweite Komponente und das Ausgießen der ersten Komponente durch die durchbrochene Oberfläche (221) zu verursachen, und
eine Abstreifvorrichtung (5), die gleitend mit der durchstochenen Oberfläche (221) der Trennvorrichtung (2) gekoppelt ist und mit dieser in Kontakt steht, und die in der Lage ist, sich entlang einer Richtung parallel zu der Entwicklungsachse (X) zu bewegen, um die erste Komponente von der durchstochenen Oberfläche (221) zu entfernen, wobei die Abstreifvorrichtung (5) eine Übertragungsgruppe (51) und ein oder mehrere Abstreifelemente (52) umfasst,
wobei die Trennmaschine **dadurch gekennzeichnet ist, dass** die Abstreiforgane (52) Folgendes umfassen:
ein erstes Schabelement (522a) und einen daran befestigten ersten Flansch (521a),
ein zweites Schabelement (522b) und einen zweiten Flansch (521b), der daran befestigt ist,
wobei das erste Schabeelement (522a) und das zweite Schabeelement (522b) fest miteinander verbunden sind.

2. Maschine (M) nach dem vorhergehenden Anspruch, **dadurch gekennzeichnet, dass** sich die Abstreifvorrichtung (5) in einer alternierenden Bewegung entlang der Entwicklungsachse (X) bewegt.

3. Maschine (M) nach dem vorhergehenden Anspruch, **dadurch gekennzeichnet, dass** das eine oder die mehreren Schabelemente (52) in der Lage sind, sich entlang der Entwicklungsachse (X) über eine oder mehrere Führungen (63) zu verschieben.

4. Maschine (M) nach dem vorhergehenden Anspruch, **dadurch gekennzeichnet, dass** das erste (522a) und das zweite (522b) Schabelement aus Polypropylen hergestellt sind.

5. Maschine (M) nach Anspruch 3 oder 4, **dadurch gekennzeichnet, dass** die Übertragungsgruppe (51) einen Motor (511), ein Getriebe (512), ein Richtungselement (514), das seinerseits einen Stift (514a) und eine Welle (513) umfasst, auf der eine doppelgängige Fadenführungsnut (513a) erhalten ist, auf der sich das Richtungselement (514) über den Stift (514a) bewegen kann, umfasst.

6. Maschine (M) nach einem der vorhergehenden Ansprüche, **dadurch gekennzeichnet**
**dass** sie einen Tragrahmen (1) umfasst, der geeignet ist, die Trennvorrichtung (2) zu tragen, und eine horizontale Fläche (11) aufweist, in der eine Öffnung entsteht,
ein erstes Auffangorgan (3), das in der Nähe der genannten Öffnung angeordnet ist und den aus der genannten Trennvorrichtung (2) austretenden Trester auffangen kann,
ein zweites Auffangorgan (4), das in der Nähe der genannten Öffnung angeordnet ist und die aus der genannten Trennvorrichtung (2) austretenden Kerne auffangen kann.

## Revendications

1. Machine de séparation (M) pour le traitement de matériel hétérogène résultant de l'usinage d'olives pour l'extraction d'huile comprenant
un dispositif de séparation (2), pourvu d'une surface percée (221) qui se développe le long d'un axe de développement (X), capable de contenir un matériau hétérogène et capable de provoquer la séparation dudit matériau hétérogène en un premier composant et un second composant et le déversement dudit premier composant à travers ladite surface percée (221), et
un dispositif de raclage (5), couplé de manière coulissante et en contact avec ladite surface percée (221) dudit dispositif de séparation (2), capable de se déplacer le long d'une direction parallèle audit axe de développement (X), pour retirer ledit premier composant de ladite surface percée (221), dans lequel ledit dispositif de raclage (5) comprend un groupe de transmission (51) et un ou plusieurs éléments de raclage (52),
ladite machine de séparation est **caractérisée par le fait que** les éléments de raclage (52) comprennent:
un premier élément de raclage (522a) et une première bride (521a) fixée à celui-ci,
un deuxième élément de raclage (522b) et une deuxième bride (521b) qui lui est fixée,
le premier élément de raclage (522a) et le second élément de raclage (522b) sont solidaires l'un de l'autre.

2. Machine (M) selon la revendication précédente, **caractérisée en ce que** ledit dispositif de raclage (5) se déplace en mouvement alternatif le long dudit axe de développement (X).

3. Machine (M) selon la revendication précédente, **caractérisée en ce que** ledit ou lesdits éléments de raclage (52) sont capables de se déplacer le long dudit axe de développement (X) par l'intermédiaire d'un ou de plusieurs guides (63).

4. Machine (M) selon la revendication précédente, **caractérisée par le fait que** les premiers (522a) et seconds (522b) éléments racleurs sont en polypropylène.

5. Machine (M) selon la revendication 3 ou 4, **caractérisée en ce que** ledit groupe de transmission (51) comprend un moteur (511), un réducteur (512), un organe directionnel (514), comprenant à son tour un axe (514a) et un arbre (513), sur lequel est obtenue une rainure de guidage de fil à double départ (513a), sur laquelle ledit organe directionnel (514) est apte à se déplacer par l'intermédiaire dudit axe (514a).

6. Machine (M) selon l'une quelconque des revendications précédentes, **caractérisée**
**en ce qu'**elle comprend un cadre de support (1), capable de supporter ledit dispositif de séparation (2), comprenant une surface horizontale (11) sur laquelle est pratiquée une ouverture,
un premier élément de collecte (3), placé près de ladite ouverture, capable de collecter le marc sortant dudit dispositif de séparation (2),
un second organe de collecte (4), placé à proximité de ladite ouverture, capable de collecter les amandes sortant dudit dispositif de séparation (2).
